(19) Europäisches Patentamt
European Patent Office
Office européen des brevets

(11) **EP 2 367 048 A1**

(12) # EUROPEAN PATENT APPLICATION

(43) Date of publication:
**21.09.2011 Bulletin 2011/38**

(51) Int Cl.:
***G02C 7/02*** (2006.01)

(21) Application number: **11156157.7**

(22) Date of filing: **28.02.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **01.03.2010 JP 2010043717**<br>**02.06.2010 JP 2010126655** | (71) Applicant: **Seiko Epson Corporation**<br>**Shinjuku-ku**<br>**Tokyo (JP)**<br><br>(72) Inventor: **Suzuki, Yohei**<br>**Nagano 392-8502 (JP)**<br><br>(74) Representative: **HOFFMANN EITLE**<br>**Patent- und Rechtsanwälte**<br>**Arabellastraße 4**<br>**81925 München (DE)** |

(54) **Spectacle lens and method for designing the same**

(57)      A spectacle lens includes: a near region corresponding to near vision, wherein a spherical equivalent power at a point located on a principal line of fixation in the near region is larger than the spherical equivalent power in a region away from the point toward the nose in a horizontal direction with reference to a spectacle wearer but smaller than the spherical equivalent power in a region away from the point toward the ear in the horizontal direction.

FIG. 1

EP 2 367 048 A1

**Description**

## BACKGROUND

1. Technical Field

The present invention relates to a spectacle lens having a near region and a method for designing the spectacle lens.

2. Related Art

An example of a single-vision spectacle lens is a spectacle lens dedicated to near vision and having a near region provided substantially all over the lens, and a progressive-power spectacle lens has a near region provided in a lower portion of the lens. A progressive-power spectacle lens called a lens for near and far vision has a far region disposed above the near region and corresponding to far vision, an intermediate region which is disposed between the far and near regions and where the power continuously changes, and intermediate side regions provided on both sides of the intermediate region. A principal line of fixation (principal meridian) is formed along substantially central portions of the far, intermediate, and near regions.

The principal line of fixation is an on-lens imaginary line where the line of sight passes through when a person who wears a pair of spectacles looks at an object located in front of the wearer and extending from above to below. In general, the principal line of fixation extends vertically in the far region and is inset in the near region toward the nose due to convergence that occurs when the wearer looks at a near object.

In designing a spectacle lens in related art, a designer sets a spherical equivalent power at a near dioptric power measuring point (center of near dioptric power measuring region) positioned on the principal line of fixation in the near region. In Example 1 of related art, the spherical equivalent power in the near region has a maximum at the near dioptric power measuring point and gradually decreases on both right and left sides thereof in the horizontal direction with reference to the spectacle wearer.

How to set the spherical equivalent power in a near dioptric power region is important, and in addition to Example 1 of related art described above, there have been examples of related art describing how to set the spherical equivalent power in the near region for a variety of purposes.

For example, in Example 2 of related art (JP-T-2003-532156), spectacle lenses are so designed that the difference in dioptric power between the right and left spectacle lenses (difference in magnification) decreases when the right and left eyes looking at an object move in the horizontal direction.

Further, in Example 3 of related art (JP-T-2008-511033), deviation of the dominant eye is measured and the amount of inset is determined accordingly.

Moreover, in Example 4 of related art (JP-A-2000-214419), the difference in maximum aberration between the nose side and the ear side is set to be a value smaller than or equal to 0.3 diopter (D) by narrowing the field of view in the far and near regions on the nose side.

Example 1 of related art has the following problem because the spherical equivalent power gradually decreases on both right and left sides of the near dioptric power measuring point in the horizontal direction with reference to the spectacle wearer.

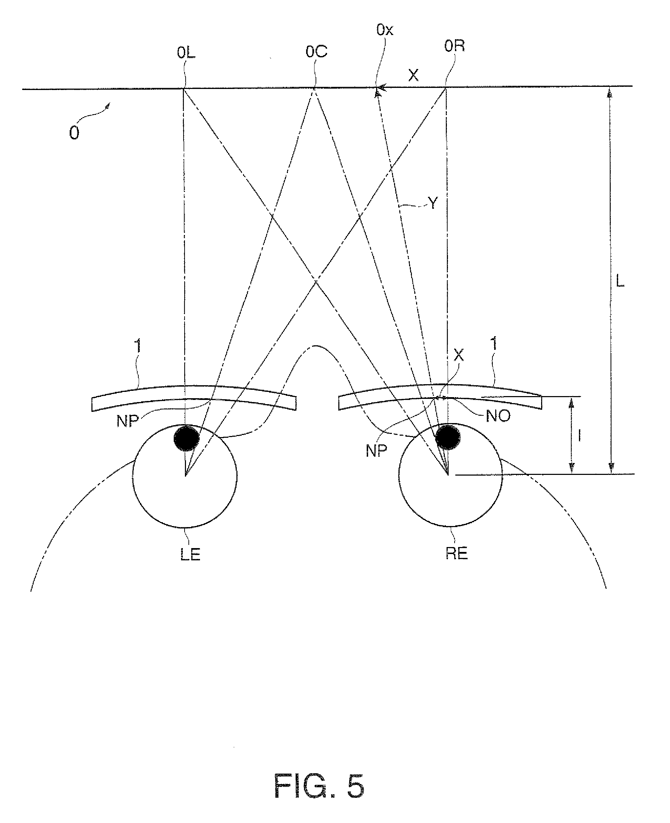

Fig. 5 describes Example 1 of related art. Fig. 5 shows the relationship among eyeballs, spectacle lenses, and an object O when the wearer looks at the object O in a flat plane close to the wearer in binocular vision.

In Fig. 5, in general, when the wearer looks in binocular vision at a target portion OC located in front of the middle position between the right eye RE and the left eye LE, the distance from the target portion OC to the right eye RE is equal to the distance from the target portion OC to the left eye LE. The power of accommodation of the right eye RE is therefore equal to that of the left eye LE. It is noted that the principal line of fixation is an imaginary line where the line of sight passes through right and left spectacle lenses 1 when the wearer looks at a point in front of the middle position in binocular vision.

In a near region of each of the spectacle lenses in Example 1 of related art, the spherical equivalent power has the same value on both the right and left sides of a near dioptric power measuring point NP on the principal line of fixation. As a result, when the wearer looks at in binocular vision a target portion OR positioned in front of the right eye RE, the right eye RE requires greater power of accommodation than the left eye LE because the distance from the target portion OR to the left eye LE is longer than the distance from the target portion OR to the right eye RE. On the other hand, when the wearer looks at in binocular vision a target portion OL positioned in front of the left eye LE, the left eye LE requires greater power of accommodation than the right eye RE because the distance from the target portion OL to the right eye RE is longer than the distance from the target portion OL to the left eye LE.

That is, in the near region of each of the spectacle lenses in Example 1. of related art, since the spherical equivalent power has the same value on the right and left sides of the near dioptric power measuring point NP on the principal line of fixation, the power of accommodation of the right eye differs in magnitude from that of the left eye depending on whether a target portion to be viewed is in front of the right eye or the left eye, resulting in ocular fatigue.

On the other hand, the spectacle lenses described in JP-T-2003-532156 are so designed that the difference in dioptric power between the right and left spectacle lenses decreases when both right and left eyes looking at an object move in the horizontal direction, but no consideration is given on the fact that necessary power of accommodation of the right eye differs in magnitude from that of the left eye when the line of sight is moved within the near region in the horizontal direction.

In JP-T-2008-511033, it is necessary to carry out a cumbersome step of measuring deviation of the dominant eye.

In JP-A-2000-214419, since it is necessary to narrow the field of view in the far and near regions on the nose side, the area clearly visible to the wearer is limited.

SUMMARY

An advantage of some aspects of the invention is to provide spectacle lenses that allow the wearer to comfortably view a near object in binocular vision by using near regions of the spectacle lenses irrespective of the horizontal position of a target portion of the object. Another advantage of some aspects of the invention is to provide a method for designing the spectacle lenses.

A spectacle lens according to an aspect of the invention includes a near region corresponding to near vision, and a spherical equivalent power at a point located on a principal line of fixation in the near region is larger than the spherical equivalent power in a region away from the point toward the nose in a horizontal direction with reference to a spectacle wearer but smaller than the spherical equivalent power in a region away from the point toward the ear in the horizontal direction.

In the aspect of the invention, the spherical equivalent power in the near region is so set that positive dioptric power is added in a region located on the ear side of the principal line of fixation and negative dioptric power is added in a region located on the nose side of the principal line of fixation. As a result, the difference in power of accommodation between the right and left eyes decreases irrespective of the position of a target object, whether it is in front of the right eye or the left eye.

The wearer can therefore readily look at a near object in binocular vision without eye fatigue. Further, since it is not necessary to change the size of the near region, the spectacle lens is highly useful for the spectacle wearer without decrease in area that can be used for near vision. Moreover, since the advantageous effects described above can be readily achieved by adjusting the spherical equivalent power on both sides of the point described above in the horizontal direction, no cumbersome step required in related art is necessary, such as a step of measuring deviation of the dominant eye.

In a preferred configuration, the spectacle lens of the aspect of the invention further includes, in addition to the near region, a far region corresponding to far vision and having power smaller than the power in the near region and an intermediate region corresponding to intermediate vision and having power continuously changing from the power in the far region to the power in the near region.

In this configuration, a progressive-power spectacle lens that can achieve the advantageous effects described above can be provided.

In a preferred configuration, the spectacle lens of the aspect of the invention further includes, in addition to the near region, an intermediate region corresponding to intermediate vision and having power smaller than the power in the near region.

The thus configured progressive-power spectacle lens can be a progressive-power spectacle lens for near-near vision (dedicated to near and intermediate vision) that can achieve the advantageous effects described above.

In a spectacle lens for near and far vision as a preferred configuration, near and intermediate vision, or near-near vision, the point described above is preferably a progressing end point positioned at the boundary between the near region and the intermediate region or a near dioptric power measuring point, which is the center of the near region.

The thus configured spectacle lens according to the aspect of the invention can be readily designed because the point described above is a near dioptric power measuring point, which is the center of a near dioptric power measuring region where the spherical equivalent power is set also in related art or a progressive end point also used in lens design of related art.

In a spectacle lens for near and far vision or near and intermediate vision as a preferred configuration, the gradient fn(x) of the spherical equivalent power along a line passing through the point and extending in the horizontal direction is preferably defined within a range where astigmatism is smaller than or equal to 0.5 diopter (D) by the following Equation (1):

$$fn(x) = \frac{d}{dx}\left[\frac{1}{\sqrt{L^2 + (Lx/l)^2}}\right] \quad (1)$$

where x represents the coordinate of the horizontal line, an x coordinate of zero corresponds to the position of the foot of a line extending from the portion of the principal line of fixation that corresponds to the far region and intersecting the horizontal line at right angles, L represents a near working distance, and 1 represents the distance from the pivotal center of the eyeball to the back surface of the lens.

In the thus configured spectacle lens according to the aspect of the invention, the spherical equivalent power at a given point on the horizontal line is determined by accurately determining the gradient of the spherical equivalent power from Equation (1), substituting specific values of L and 1 into the thus determined equation of the gradient of the spherical equivalent power, adding prescribed addition dioptric power at the predetermined point described above, and setting the spherical equivalent power to be maximized at x=0,

As a result, a spectacle lens that meets actual conditions of a spectacle wearer can be readily provided based on Equation (1).

In a spectacle lens for near-near vision as a preferred configuration, the following conditions are met: The position of a fitting point of the spectacle lens when worn is determined by a near interpupillary distance; the point described above is the fitting point; and the gradient fn(x) of the spherical equivalent power along a line extending in the horizontal direction is defined within a range where astigmatism is smaller than or equal to 0.5 diopter (D) by the following Equation (2):

$$fn(x) = \frac{d}{dx}\left[\frac{1}{\sqrt{L^2 + \left[\frac{L(x-m)}{l}\right]^2}}\right] \quad (2)$$

where x represents the coordinate of the line extending in the horizontal direction, the positive side of the x coordinate axis corresponds to the ear side in the horizontal direction, an x coordinate of zero corresponds to the fitting point, L represents a near working distance, 1 represents the distance from the pivotal center of the eyeball to the back surface of the lens, and m represents the difference between a far monocular interpupillary distance and a near monocular interpupillary distance.

In the thus configured spectacle lens according to the aspect of the invention, the spherical equivalent power at a given point on the line extending in the horizontal direction is determined by accurately determining the gradient of the spherical equivalent power from Equation (2), substituting specific values of L and I into the thus determined equation of the gradient of the spherical equivalent power, adding prescribed addition dioptric power at the predetermined point described above, and setting the spherical equivalent power to be maximized at x=m.

The near interpupillary distance (near PD) in the aspect of the invention is an interpupillary distance in near vision and actually refers to a lens optical center distance (near MA) of a spectacle frame to be worn. The spherical equivalent power is set to have a maximum in a position separated from the fitting point toward the ear by the distance m.

As a result, a spectacle lens dedicated to near vision that meets actual conditions of a spectacle wearer can be readily provided based on Equation (2).

In typical spectacle adjustment, the fitting point is so adjusted that it coincides with the eye point of the spectacle lens when worn, and lens design is also performed assuming that the fitting point coincides with the eye point of the spectacle lens when worn. The distance between the fitting point of the right lens and the fitting point of the left lens is therefore equal to the interpupillary distance. In many cases, a far interpupillary distance is used as the interpupillary distance of a lens for near and far vision and a lens for near and intermediate vision, whereas a near interpupillary distance is used as the interpupillary distance of a lens for near-near vision and a single-vision lens for near vision.

A method for designing a spectacle lens according another aspect of the invention is a method for designing the spectacle lens described above, the method including setting the principal line of fixation, setting the spherical equivalent power at the point described above in the near region, setting the spherical equivalent power at the point to be larger than the spherical equivalent power in a region away from the point toward the nose in the horizontal direction with reference to the spectacle wearer, and setting the spherical equivalent power at the point to be smaller than the spherical equivalent power in a region away from the principal line of fixation toward the ear in the horizontal direction.

In this aspect of the invention, a spectacle lens that can achieve the advantageous effects described above can be readily designed.

BRIEF DESCRIPTION OF THE DRAWINGS

The invention will be described with reference to the accompanying drawings, wherein like numbers reference like elements.

Fig. 1 is a schematic plan view of a spectacle lens according to a first embodiment of the invention.
Fig. 2 shows graphs representing the relationship between the position on a horizontal line passing through a near dioptric power measuring point and a spherical equivalent power.
Fig. 3A is an aberration diagram of the spectacle lens according to the first embodiment, and Fig. 3B shows a spherical equivalent power of the spectacle lens.
Fig. 4A is an aberration diagram of a spectacle lens according to a related art design example, and Fig. 4B shows a spherical equivalent power of the spectacle lens.
Fig. 5 is a schematic view showing the relationship among a target object, spectacle lenses, and eyeballs.
Fig. 6 is a schematic plan view of a spectacle lens according to a second embodiment of the invention.
Fig. 7A is an aberration diagram of the spectacle lens according to the second embodiment, and Fig. 7B shows a spherical equivalent power of the spectacle lens.
Fig. 8A is an aberration diagram of a spectacle lens according to a related art design example, and Fig. 8B shows a spherical equivalent power of the spectacle lens.
Fig. 9 is a schematic plan view of a spectacle lens according to a third embodiment of the invention.
Fig. 10 is a schematic view showing a near PD.
Fig. 11 shows graphs representing the relationship between the position on a horizontal line passing through an eye point and a spherical equivalent power.
Fig. 12A is an aberration diagram of the spectacle lens according to the third embodiment, and Fig. 12B shows a spherical equivalent power of the spectacle lens.
Fig. 13A is an aberration diagram of a spectacle lens according to a related art design example, and Fig. 13B shows a spherical equivalent power of the spectacle lens.

DESCRIPTION OF EXEMPLARY EMBODIMENTS

Embodiments of the invention will be described with reference to the drawings. In the description of each of the embodiments, the same components have the same reference characters, and descriptions thereof will be omitted or simplified.

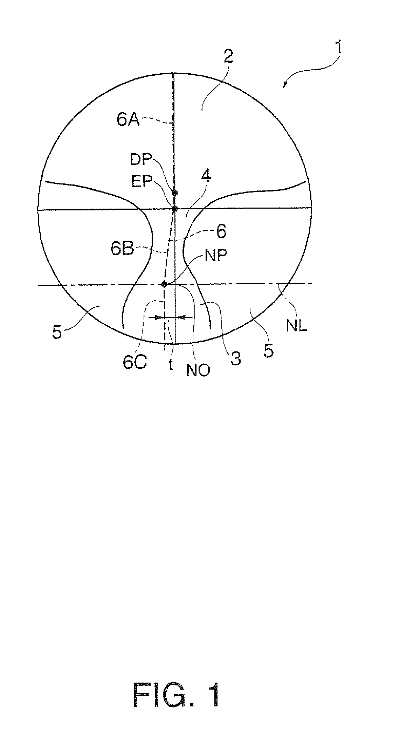

Figs. 1 to 5 show a first embodiment of the invention.

Fig. 1 is a schematic plan view of a spectacle lens according to the first embodiment.

In Fig. 1, a spectacle lens 1 is a progressive-power spectacle lens for near and far vision including a far region 2 provided in an upper portion of the spectacle lens 1 and corresponding to far vision, a near region 3 provided in a lower portion of the spectacle lens 1 and corresponding to near vision, an intermediate region 4 provided in an intermediate position of the spectacle lens 1 and having power continuously changing from that in the far region 2 to that in the near region 3, and intermediate side regions 5 provided on both sides of the intermediate region 4. The spectacle lens 1 shown in Fig. 1 is a spectacle lens for the right eye.

The far region 2, the near region 3, and the intermediate region 4 are formed on the inner surface (eyeball side) or the outer surface (opposite side to eyeball side) of the spectacle lens 1.

A principal line of fixation 6, which is an on-lens imaginary line where the line of sight passes through when a person who wears a pair of spectacles looks at an object located in front of the wearer and extending from above to below, is provided in substantially central portions of the far region 2, the intermediate region 4, and the near region 3. The principal line of fixation 6, which is also referred to as a principal meridian, is formed of a far line portion 6A extending across the far region 2, a progressive line portion 6B extending across the intermediate region 4, and a near line portion 6C extending across the near region 3. It is noted that the center line passing through the center of the spectacle lens coincides with the far line portion 6A but the far line portion 6A drawn in Fig. 1 is shifted from the center line in order to clearly show the far line portion 6A.

The far line portion 6A is so formed that it passes through an eye point EP and extends vertically with reference to the spectacle wearer. A far dioptric power measuring point DP is located in a position on the far line portion 6A, for example, a position above the eye point EP by 4 mm. The far dioptric power measuring point DP is the center of a far dioptric power measuring region where power is added in the far region 2.

The near line portion 6C is so formed that it passes through a near dioptric power measuring point NP, extends vertically with reference to the spectacle wearer, and is inset from the far line portion 6A toward the nose (leftward in Fig. 1) by a dimension t. The progressive line portion 6B is a line that connects the lower end of the far line portion 6A to the upper end of the near line portion 6C and is inclined to the far line portion 6A and the near line portion 6C.

The eye point EP is a position where a horizontal line passing through the center of the pupil (that is, the line of sight) passes through when the spectacle wearer looks at an object in front thereof. The eye point EP is positioned on a line extending vertically upward from the geometric center of the spectacle lens 1.

When power is added in the near dioptric power measuring region in the near region 3, the spherical equivalent power is set differently in the present embodiment from related art along a horizontal line NL including the near dioptric power measuring point NP.

The spherical equivalent power is also referred to as average dioptric power or average power. The power of a spectacle lens is defined as the reciprocal of the distance from the position on the back surface of the lens where the line of sight passes through to the focal point in the eyeball. Light rays passing through the periphery of the lens, however, form a plurality of focal points due to astigmatism. In view of the situation, the average of the magnitudes of power corresponding to the plurality of focal points is set in the present embodiment.

The near dioptric power measuring point NP is the center of the near region to which power is added and serves as a point with reference to which the lens is designed (hereinafter referred to as a reference point).

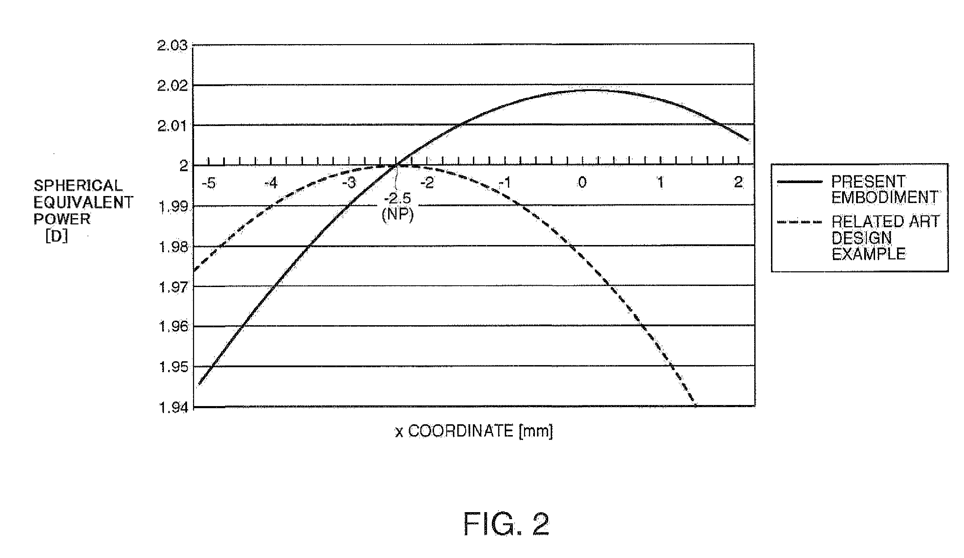

In the present embodiment, the spherical equivalent power at the near dioptric power measuring point NP is set by using a typical method in accordance with the vision of the spectacle wearer and other conditions. The spherical equivalent power at a point away from the near dioptric power measuring point NP horizontally toward the nose with reference to the spectacle wearer (leftward in Fig. 1) is set to decrease continuously, whereas the spherical equivalent power at a point away from the near dioptric power measuring point NP horizontally toward the ear (rightward in Fig. 1) is set to increase continuously (see Fig. 2).

Fig. 2 shows a specific example of the relationship between the position on the horizontal line NL passing through the near dioptric power measuring point NP and the spherical equivalent power.

In Fig. 2, x represents the horizontal distance along the line NL, and x=0 corresponds to a position NO (see Fig. 1), the foot of a line extending from the far line portion 6A, which is the portion of the principal line of fixation 6 in the far region 2, and intersecting the horizontal line NL at right angles. A positive x corresponds to a value on the ear side, and a negative x corresponds to a value on the nose side.

The spherical equivalent power continuously increases in the direction from the near dioptric power measuring point NP toward the ear until the x=0 position is reached and then continuously decreases on the right side of the x=0 position. On the other hand, the spherical equivalent power continuously decreases in the direction from the near dioptric power measuring point NP toward the nose.

In the present embodiment, the gradient fn(x) of the spherical equivalent power is determined within a range $-7.5 \leq x \leq 2.5$ by Equation (1) below.

In Equation (1), L represents a near working distance, which is the distance from the pivotal center of one of the eyeballs to an object O in front of the eyeball, and 1 represents the distance from the pivotal center of the eyeball to the back surface of the lens (see Fig. 5).

$$fn(x) = \frac{d}{dx}\left[\frac{1}{\sqrt{L^2 + (Lx/l)^2}}\right] \quad (1)$$

In Fig. 5, when the wearer looks at a position Ox separated from a target portion OR positioned in front of one of the eyeballs, for example, the right eye RE, by a dimension X, the ratio of X to L is equal to the ratio of x to 1, whereby Equation (1-1) is derived.

$$X = x \times L/l \quad (1-1)$$

The distance Y from the center of the eyeball to the position Ox is then determined by Equation (1-2) below.

$$Y = (L^2 + (L \times x/l)^2)^{1/2} \quad (1-2)$$

The power of accommodation necessary to look at a target portion separated by the distance Y is determined based on the reciprocal of the distance Y, and the derivative of the reciprocal is the gradient fn(x) determined by Equation (1).

The spherical equivalent power at a given point on the horizontal line NL is determined by substituting specific values of the near working distance L and the distance 1 from the pivotal center of the eyeball to the back surface of the lens into the gradient fn(x) determined by Equation (1) and taking into account near dioptric power obtained from prescriptions at a position corresponding to a predetermined amount of inset t.

The graph shown in Fig. 2 represents the spherical equivalent power obtained by substituting the following specific values: The predetermined amount of inset t is -2.5 mm; the spherical equivalent power set at the near dioptric power measuring point NP is 2.00 diopter (D); the near working distance L is 300 mm; and the distance 1 from the pivotal center of the eyeball to the back surface of the lens is 25 mm.

Fig. 2 also shows the gradient used in a related art design example. In the related art design example, the spherical equivalent power decreases at the same rate with distance from the near dioptric power measuring point NP, where the spherical equivalent power has a maximum, on both sides of the near dioptric power measuring point NP, that is, on the nose side and the ear side. In the present embodiment, positive dioptric power is added on the right (ear side) of the near dioptric power measuring point NP and negative dioptric power is added on the left (nose side) of the near dioptric power measuring point NP, unlike the related art design example.

In the present embodiment, the far region 2 is so designed that power is added to the far dioptric power measuring region by using the same method as that used in the related art, and then the intermediate region 4 and the intermediate side regions 5 are designed by using the same method.

In other words, in the present embodiment, the near region 3 is designed differently from the related art, whereas the other regions are designed in the same manner as in the related art. The above description has been made with reference to the spectacle lens 1 for the right eye, and the spectacle lens for the left eye is designed in the same manner as the spectacle lens 1 for the right eye: The spherical equivalent power at a point away from the near dioptric power measuring point NP horizontally toward the nose with reference to the spectacle wearer is set to decrease continuously, whereas the spherical equivalent power at a point away from the near dioptric power measuring point NP horizontally toward the ear is set to increase continuously.

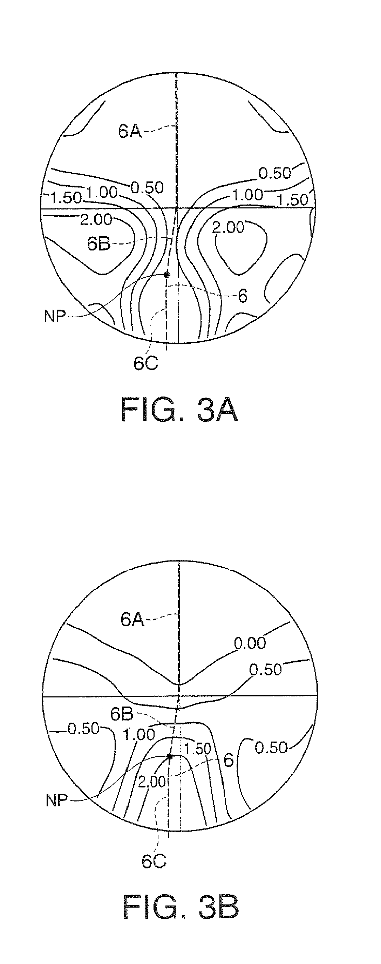

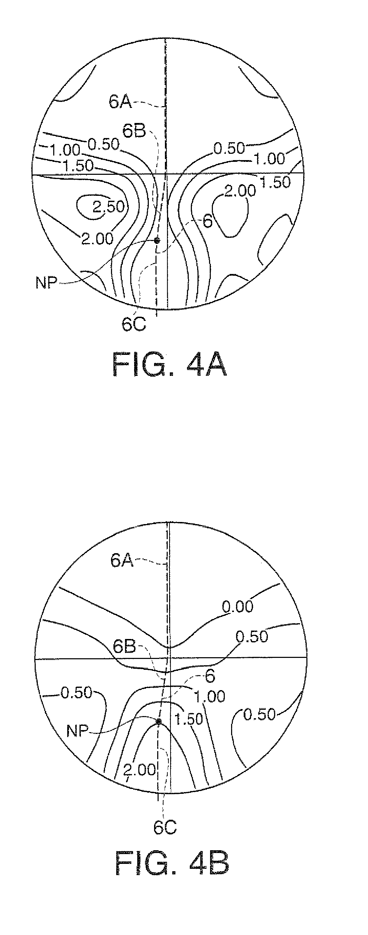

Figs. 3A and 3B show the spectacle lens 1 in the first embodiment. Fig. 3A is an aberration diagram, and Fig. 3B shows average dioptric power. Figs. 4A and 4B show a spectacle lens in the related art design example. Fig. 4A is an aberration diagram, and Fig. 4B shows average dioptric power. In Figs. 3A, 3B, 4A, and 4B, the portions other than the near region were designed in the same manner as in related art but under the following conditions: the length of a progressive corridor is 14 mm; S is 0.00; and addition power ADD is 2.00 diopter (D).

The gradient of the spherical equivalent power was determined within a range $-7.5 \leq x \leq 2.5$ by using Equation (1), and Fig. 3B shows the resultant distribution of the spherical equivalent power within 0.5 diopter (D) shown in Fig. 3A.

Comparison between Fig. 3A and Fig. 4A in terms of aberration shows that the present embodiment and the related art design example do not substantially differ from each other because a region that provides distinct vision, that is, a region where astigmatism is smaller than or equal to 0.5 diopter (D), is provided along the principal line of fixation 6. It is, however, seen from Figs. 3A and 4A that the present embodiment differs from the related art design example in that the largest amount of aberration on the nose side decreases so that the amount of aberration on the nose side (left side in Figs. 3A and 4A) is well balanced with the amount of aberration on the ear side (right side in Figs. 3A and 4A).

Comparison between Figs. 3B and 4B in terms of spherical equivalent power shows that the near dioptric power peaks at the near dioptric power measuring point NP located on the principal line of fixation 6 in the related art design example, whereas the near dioptric power peaks at a point away from the near dioptric power measuring point NP but closer to the ear in the present embodiment.

The first embodiment can therefore provide the following advantageous effects:

(1) The spherical equivalent power at a point away from the reference point, which is located on the principal line of fixation 6 in the near region 3 of the spectacle lens 1, toward the nose in the horizontal direction with reference to the spectacle wearer is set to be smaller than the spherical equivalent power at the reference point, whereas the spherical equivalent power at a point away from the reference point toward the ear in the horizontal direction is set to be larger than the spherical equivalent power at the reference point. The problem described above, in which when the wearer looks at in binocular vision the target portion OR or OL located on the side where the right eye RE or the left eye LE is present, one of the right eye RE and the left eye LE requires greater power of accommodation than the other, can be solved in the present embodiment because a large spherical equivalent power is set in a portion of the lens through which the line of sight from the eye that requires large power of accommodation, whereas a small spherical equivalent power is set in a portion of the lens through which the line of sight from the eye that does not require large power of accommodation, whereby the difference in power of accommodation between the right and left eyes decreases, and the wearer can readily look at a near object in binocular vision without eye fatigue.

Further, since it is not necessary to change the size of the near region 3, the spectacle lens 1 is highly useful for the spectacle wearer without decrease in area that can be used for near vision.

Moreover, since the advantageous effects described above can be readily achieved by adjusting the average dioptric power on both sides of the reference point in the horizontal direction, no cumbersome step is necessary, such as a step of measuring deviation of the dominant eye.

(2) The spectacle lens 1 of the first embodiment is a progressive-power spectacle lens for near and far vision including the near region 3, the far region 2 corresponding to far vision and having the eye point EP set therein, and the intermediate region 4 where power continuously changes from that in the far region 2 to that in the near region 3. As a result, when the wearer looks at a near object in binocular vision by using the near regions 3 of the progressive-power spectacle lenses, the observation can be comfortably performed irrespective of the position of a target object in the horizontal direction.

(3) The gradient fn(x) of the graph representing the spherical equivalent power is determined from Equation (1), and then the equation of the gradient of the spherical equivalent power determined by Equation (1) and prescribed addition dioptric power at a predetermined reference point are used to determine the graph of the spherical equivalent power shown in Fig. 2 in such a way that the spherical equivalent power is maximized at x=0. As a result, a spectacle lens 1 that meets actual conditions of a spectacle wearer can be readily provided.

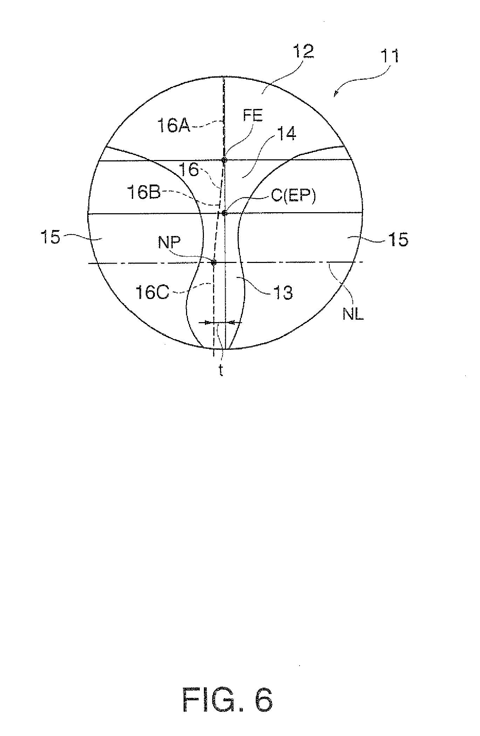

A second embodiment of the invention will next be described with reference to Figs. 6, 7A, 7B, 8A, and 8B.

Fig. 6 is a schematic plan view of a spectacle lens according to the second embodiment.

In Fig. 6, a spectacle lens 11 is a progressive-power spectacle lens for near and intermediate vision including a far region 12 provided in an upper portion of the spectacle lens 11 and corresponding to far vision, a near region 13 provided in a lower portion of the spectacle lens 11 and corresponding to near vision, an intermediate region 14 provided in an intermediate position of the spectacle lens 11 and having power continuously changing from that in the far region 12 to that in the near region 13, and intermediate side regions 15 provided on both sides of the intermediate region 14. The spectacle lens 11 shown in Fig. 6 is a spectacle lens for the right eye.

The far region 12, the near region 13, and the intermediate region 14 are formed on the inner surface (eyeball side) or the outer surface (opposite side to eyeball side) of the spectacle lens 11.

A principal line of fixation 16, which is an on-lens imaginary line where the line of sight passes through when a person who wears a pair of spectacles looks at an object located in front of the wearer and extending from above to below, is provided in substantially central portions of the far region 12, the intermediate region 14, and the near region 13.

The principal line of fixation 16 is formed of a far line portion 16A extending across the far region 12, a progressive line portion 16B extending across the intermediate region 14, and a near line portion 16C extending across the near region 13.

The far line portion 16A is so formed that it extends vertically with reference to the spectacle wearer.

The near line portion 16C is so formed that it passes through a near dioptric power measuring point NP, extends vertically with reference to the spectacle wearer, and is inset from the far line portion 16A toward the nose (leftward in Fig. 6) by a dimension t.

The progressive line portion 16B is a line that connects the lower end EF of the far line portion 16A to the near dioptric power measuring point NP, which is the upper end of the near line portion 16C, and is inclined to the far line portion 16A and the near line portion 16C.

In the second embodiment, the eye point EP is provided in a predetermined location in the intermediate region 14, for example, a geometric center C of the spectacle lens 11, and determined by the interpupillary distance in far vision.

In the second embodiment, the spherical equivalent power at the near dioptric power measuring point NP is set by using a typical method in accordance with the vision of the spectacle wearer and other conditions, as in the first embodiment. The spherical equivalent power at a point away from the dioptric power measuring point NP horizontally toward the nose with reference to the spectacle wearer (leftward in Fig. 6) is set to decrease continuously, whereas the spherical equivalent power at a point away from the dioptric power measuring point NP horizontally toward the ear (rightward in Fig. 6) is set to increase continuously. That is, the spherical equivalent power continuously increases in the direction from the dioptric power measuring point NP toward the ear until the x=0 position is reached and then continuously decreases on the right side of the x=0 position, as shown in Fig. 2. On the other hand, the spherical equivalent power continuously decreases in the direction from the near dioptric power measuring point NP toward the nose.

In the second embodiment, the gradient fn(x) of the spherical equivalent power is determined within a range $-7.5 \leq x \leq 2.5$ by Equation (1) below.

$$fn(x) = \frac{d}{dx}\left[\frac{1}{\sqrt{L^2 + (Lx/l)^2}}\right] \quad (1)$$

The spherical equivalent power at a given point on a horizontal line NL is determined by substituting specific values of the near working distance L and the distance 1 from the pivotal center of the eyeball to the back surface of the lens into the gradient fn(x) determined by Equation (1) and taking into account near dioptric power determined from prescriptions at a position corresponding to a predetermined amount of inset t. In the second embodiment, the predetermined amount of inset t is -2.5 mm; the spherical equivalent power set at the near dioptric power measuring point NP is 2.00 diopter (D); the near working distance L is 300 mm; and the distance 1 from the pivotal center of the eyeball to the back surface of the lens is 25 mm, as in the first embodiment (see Fig. 2).

In the second embodiment, the far region 12 is so designed that power is added to the far dioptric power measuring region by using the same method as that used in related art, and then the intermediate region 14 and the intermediate side regions 15 are designed by using the same method.

In other words, in the second embodiment, the near region 13 is designed differently from related art, whereas the other regions are designed in the same manner as in related art. The spectacle lens for the left eye is designed in the same manner as the spectacle lens 1 for the right eye: The spherical equivalent power at a point away from the near dioptric power measuring point NP horizontally toward the nose with reference to the spectacle wearer is set to decrease continuously, whereas the spherical equivalent power at a point away from the near dioptric power measuring point NP horizontally toward the ear is set to increase continuously.

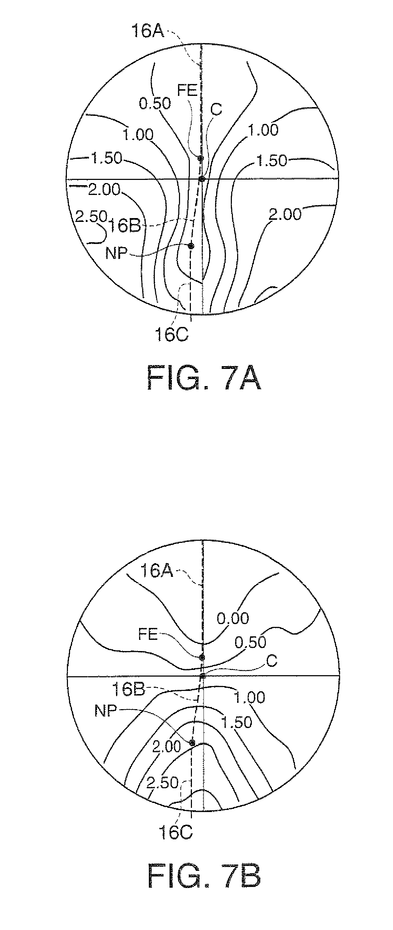

Figs. 7A and 7B show the spectacle lens 11 in the second embodiment. Fig. 7A is an aberration diagram, and Fig. 7B shows average dioptric power.

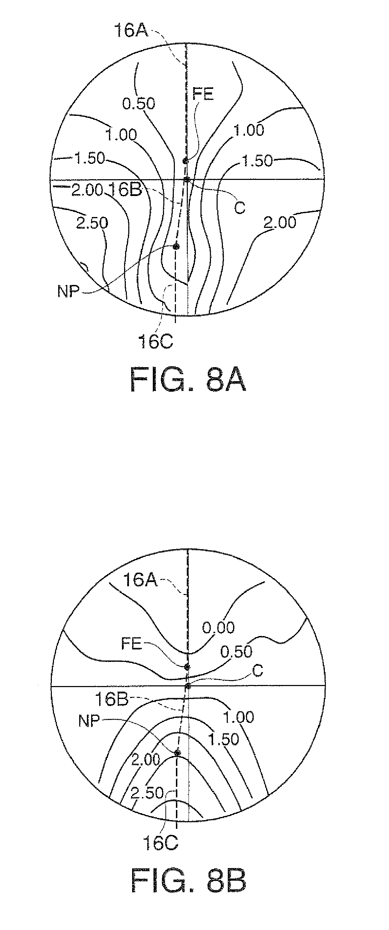

Figs. 8A and 8B show a spectacle lens in a related art design example. Fig. 8A is an aberration diagram, and Fig. 8B shows average dioptric power. In Figs. 7A, 7B, 8A, and 8B, the portions other than the near region were designed in the same manner as in related art but under the following conditions: the length of a progressive corridor is 24 mm; S is 0.00; and addition power ADD is 2.50 diopter (D).

The gradient of the spherical equivalent power was determined within a range $-7.5 \leq x \leq 2.5$ by using Equation (1), and Fig. 7B shows the resultant distribution of the spherical spherical equivalent power within a region where astigmatism is smaller than or equal to 0.5 diopter (D) shown in Fig. 7A.

Comparison between Fig. 7A and Fig. 8A in terms of aberration shows that the second embodiment and the related art design example do not substantially differ from each other because a region that provides distinct vision, that is, a region where astigmatism is smaller than or equal to 0.5 diopter (D), is provided along the principal line of fixation 16. It is, however, seen from Figs. 7A and 8A that the second embodiment differs from the related art design example in that the largest amount of aberration on the nose side decreases so that the amount of aberration on the nose side (left side in Figs. 7A and 8A) is well balanced with the amount of aberration on the ear side (right side in Figs. 7A and 8A).

Comparison between Figs. 7B and 8B in terms of spherical equivalent power shows that the near dioptric power peaks at the near dioptric power measuring point NP located on the principal line of fixation 16 in the related art design example, whereas the near dioptric power peaks at a point away from the near dioptric power measuring point NP but closer to the ear in the second embodiment.

The second embodiment can therefore provide the same advantageous effects as those provided in the first embodiment in a progressive-power spectacle lens for near and intermediate vision.

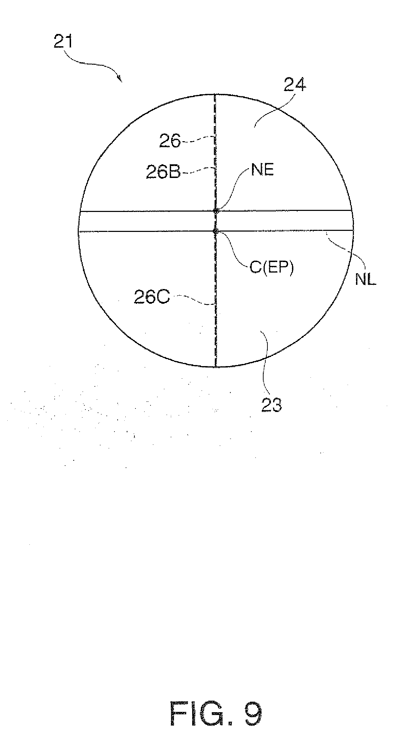

A third embodiment of the invention will next be described with reference to Figs. 9, 10, 11, 12A, 12B, 13A, and 13B.

Fig. 9 is a schematic plan view of a spectacle lens according to the third embodiment. In Fig. 9, a spectacle lens 21 is a progressive-power spectacle lens dedicated to near vision including a near region 23 provided in a portion ranging from an intermediate portion to a lower portion of the spectacle lens 21 and corresponding to near vision and an intermediate region 24 provided above the near region 23, having power smaller than that in the near region 23, and corresponding to intermediate vision. In the third embodiment, the near region 23 has larger right and left areas than the near regions 3 and 13 in the embodiments described above. The spectacle lens 21 shown in Fig. 9 is a spectacle lens for the right eye.

The near region 23 and the intermediate region 24 are formed on the inner surface (eyeball side) or the outer surface (opposite side to eyeball side) of the spectacle lens 21.

A principal line of fixation 26, which is an on-lens imaginary line where the line of sight passes through when a person who wears a pair of spectacles looks at an object located in front of the wearer and extending from above to below, is provided in substantially central portions of the intermediate region 24 and the near region 23. The principal line of fixation 26 is formed of a progressive line portion 26B extending across the intermediate region 24 and a near line portion 26C extending across the near region 23.

In the third embodiment, a fitting point defined when a pair of spectacles is worn is determined by using a near PD. The near PD is an interpupillary distance in near vision, as will be described later, and actually refers to a lens optical center distance (near MA) of a spectacle frame to be worn.

In typical spectacle adjustment, the fitting point is so adjusted that it coincides with the eye point EP of the spectacle lens when worn, and lens design is also performed assuming that the fitting point coincides with the eye point EP of the spectacle lens when worn. The spherical equivalent power is therefore set to a maximum in a position away from the fitting point (eye point EP) toward the ear by a distance m.

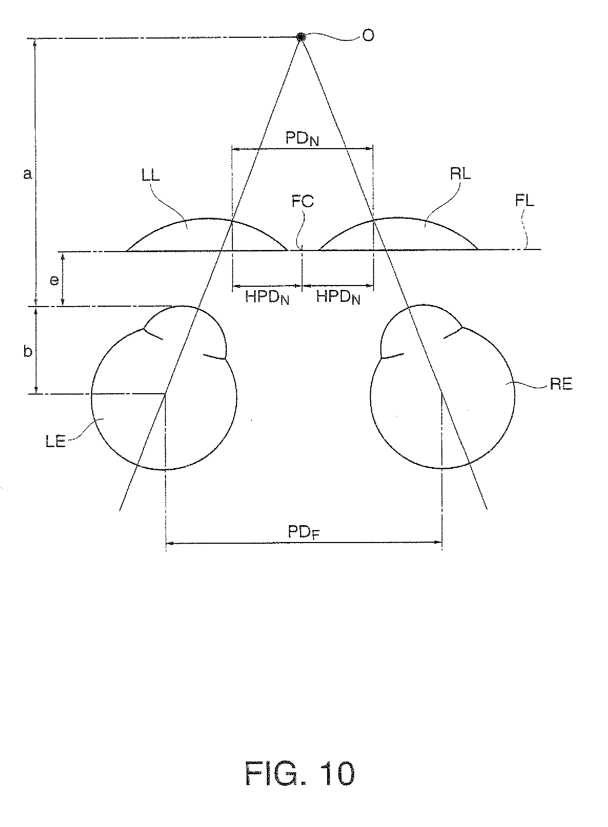

A description will be made of how to determine the distance m with reference to Fig. 10.

Fig. 10 shows the near PD.

In Fig. 10, lines of sight in near vision directed from the right and left eyeballs RE and LE toward a near object O pass through right and left spectacle lenses RL and LL. In an exact sense, the distance between the pupils of the right and left eyeballs RE and LE is the near PD, but the distance between the positions where the lines of sight pass through the spectacle lenses RL and LL is used as the near PD in the following description. On the other hand, the interpupillary distance in far vision is a far PD, which is equal to the distance between the centers of the right and left eyeballs RE and LE.

The near $PD_N$ can be directly measured or calculated based on the far PD.

To directly measure the near $PD_N$, an interpupillary distance meter (PD meter manufactured by TOPCON CORPORATION, Model: PD-5, for example) can be used. Now, let FC be a bridge center on a frame line FL of a spectacle frame. The distance between the position FC and the center of the pupil is a far monocular interpupillary distance $HPD_F$, and the distance between the position FC and the position where the line of sight passes through the spectacle lens RL or LL is a near monocular interpupillary distance $HPD_N$.

(1) When near PD and far PD are measured

The far monocular interpupillary distance $HPD_F$ and the near monocular interpupillary distance $HPD_N$ are measured with an interpupillary distance meter, and the distance m is determined by using the following equation: $m=HPD_F-HPD_N$.

(2) When only far PD is measured

The far monocular interpupillary distance $HPD_F$ is measured with an interpupillary distance meter, and a near intended distance "a", a distance "b" between the center of the eyeball and the vertex of the cornea of the eyeball, and a cornea vertex distance "e" are used to determine the distance m by using the equation below.

That is, since $HPD_N/HPD_F$ is $(a-e)/(a+b)$ as shown in Fig. 10, the distance m is determined by using the following equation:

$$m=HPD_F-HPD_N=HPD_F-HPD_F\times\{(a-e)/(a+b)\}=HPD_F\{1-(a-e)/(a+b)\}$$

Measured "b" and "e" may be used, or typical average values b=13 mm and e=12 mm may be used in the above equation.

(3) When only near PD is measured

The near monocular interpupillary distance $HPD_N$ is measured with an interpupillary distance meter, and the near intended distance "a", the distance "b" between the center of the eyeball and the vertex of the cornea of the eyeball, and the cornea vertex distance "e" are used to determine the distance m by using the following equation: $m=HPD_F-HPD_N=HPD_N\times\{(a+b)/(a-e)-1\}$

In the third embodiment, the gradient $fn(x)$ of the spherical equivalent power is defined within a range where unwanted astigmatism is smaller than or equal to 0.5 diopter (D) by the following Equation (2):

$$fn(x) = \frac{d}{dx}\left[\frac{1}{\sqrt{L^2 + \left[\frac{L(x-m)}{l}\right]^2}}\right] \quad (2)$$

where x represents the coordinate of a horizontal line passing through the eye point EP; an x coordinate of zero corresponds to the eye point EP; L represents the near working distance; and 1 represents the distance from the pivotal center of the eyeball to the back surface of the lens.

The spherical equivalent power at a given point on the horizontal line NL is determined by substituting specific values of the near working distance L and the distance 1 from the pivotal center of the eyeball to the back surface of the lens into the gradient fn(x) determined by Equation (2) and taking into account near dioptric power determined from prescriptions at x=0.

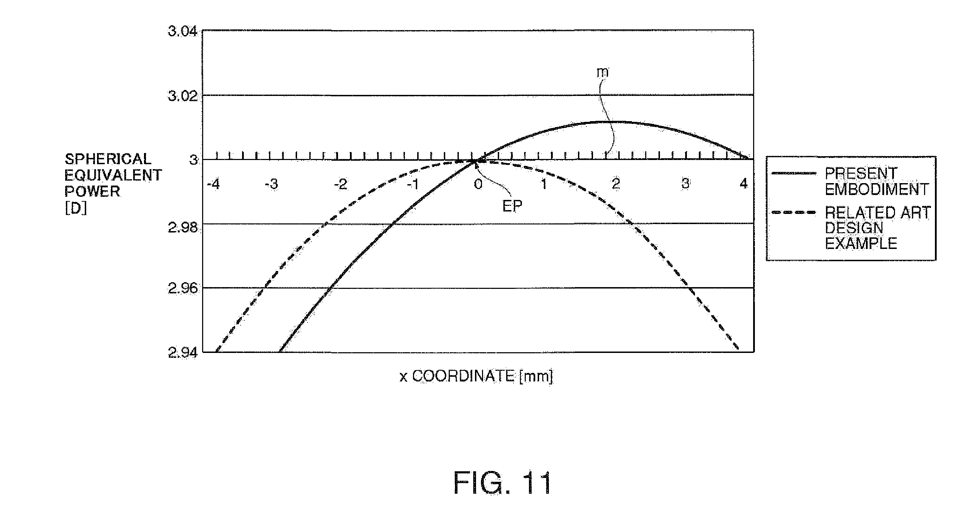

Fig. 11 shows a specific example of the relationship between the position on the horizontal line passing through the eye point EP and the spherical equivalent power. In Fig. 11, x=0 corresponds to the eye point EP, and the spherical equivalent power continuously increases in the direction toward the ear until the position separated from the eye point EP by the distance m (2 mm) is reached and then continuously decreases after the position in the direction toward the ear. On the other hand, the spherical equivalent power continuously decreases in the direction from the eye point EP toward the nose. The graph shown in Fig. 11 is obtained under the following conditions: The spherical equivalent power set in the position separated from the eye point EP toward the ear by the distance m (2 mm) is 3.01 diopter (D); the near working distance L is 300 mm; and the distance 1 from the pivotal center of the eyeball to the back surface of the lens is 25 mm.

Fig. 11 also shows the gradient used in a related art design example. In the related art design example, the spherical equivalent power decreases at the same rate with distance from the eye point EP, where the spherical equivalent power has a maximum, on both sides of the eye point EP, that is, on the nose side and the ear side. In the present embodiment, positive dioptric power is added on the right (ear side) of the eye point EP and negative dioptric power is added on the left (nose side) of the eye point EP, unlike the related art design example.

In the third embodiment, power is added to the intermediate region 24 by using the same method as that used in related art.

In other words, in the third embodiment, the near region 23 is designed differently from related art, whereas the other regions are designed in the same manner as in related art. The spectacle lens for the left eye is designed in the same manner as the spectacle lens 21 for the right eye. The spherical equivalent power at a point sway from the eye point EP horizontally toward the nose with reference to the spectacle wearer is set to decrease continuously, whereas the spherical equivalent power at a point away from the eye point EP horizontally toward the ear is set to increase continuously.

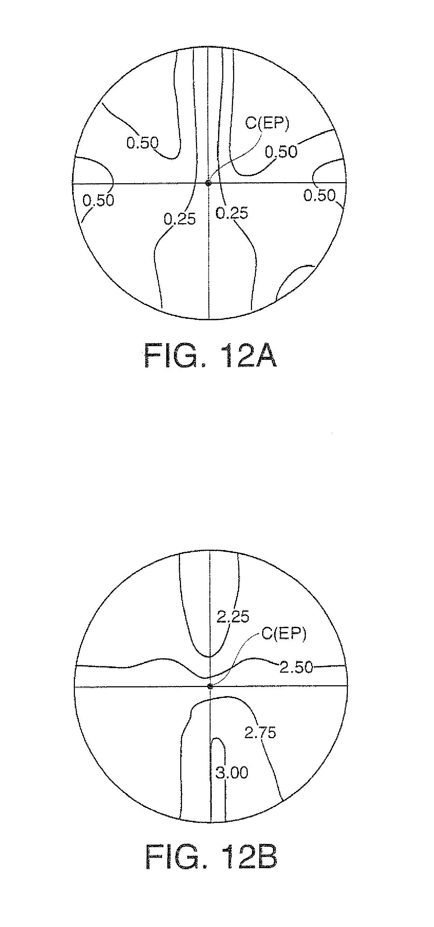

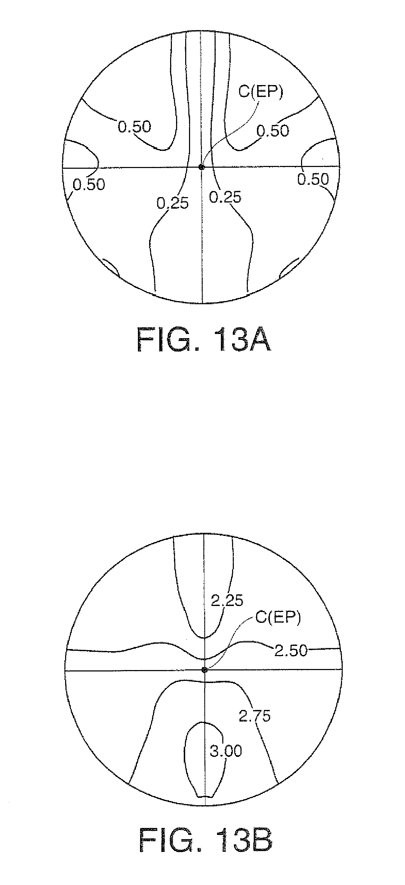

Figs. 12A and 12B show the spectacle lens 21 in the third embodiment. Fig. 12A is an aberration diagram, and Fig. 12B shows average dioptric power. Figs. 13A and 13B show a spectacle lens in the related art design example. Fig. 13A is an aberration diagram, and Fig. 13B shows average dioptric power. In Figs. 12A, 12B, 13A, and 13B, the spectacle lenses are designed under the following conditions: a base is 3.00 and addition power ADD is 1.00 diopter (D).

The gradient of the spherical equivalent power was determined within a range -7.5≤x≤2.5 by using Equation (2), and Fig. 12B shows the resultant distribution of the spherical equivalent power within 0.25 diopter (D) shown in Fig. 12A.

Comparison between Fig. 12A and Fig. 13A in terms of aberration shows that the present embodiment and the related art design example do not substantially differ from each other in terms of a region that provides distinct vision, that is, a region where astigmatism is smaller than or equal to 0.5 diopter (D). It is, however, seen from Figs. 12A and 13A that the present embodiment differs from the related art design example in that the largest amount of aberration on the nose side decreases so that the amount of aberration on the nose side (left side in Figs. 12A and 13A) is well balanced with the amount of aberration on the ear side (right side in Figs. 12A and 13A). Comparison between Figs. 12B and 13B in terms of spherical equivalent power shows that the near dioptric power peaks at a point on the principal line of fixation 26 in the related art design example, whereas the near dioptric power peaks at a point away from the principal line of fixation 26 but closer to the ear (right side in Figs. 12B and 13B) in the present embodiment.

The third embodiment can therefore provide the same advantageous effects as those provided in the first embodiment in a spectacle lens for near-near vision.

The invention is not limited to the embodiments described above but variations and improvements to the extent that the advantage of the invention can be achieved, of course, fall within the scope of the invention.

For example, in the embodiments described above, the spectacle lens is a progressing-power spectacle lens including the far region 2 or 12, the near region 3 or 13, and the intermediate region 4 or 14 or a progressing-power spectacle lens with the near region 23 having a greater width. In addition to the above, the invention is applicable to a single-vision lens.

Further, in the first and second embodiments, the near dioptric power measuring point NP is used as the reference point, which is a reference used to change the spherical equivalent power. In the invention, the reference point may alternatively be any point that is other than the near dioptric power measuring point NP but located on the near line portion 6C or 16C offset inward by the amount of inset t with respect to the line extending from the eye point EP on the principal line of fixation 6 or 16, for example, a progressive end point located at the boundary between the near region and the intermediate region or a point above or below the near dioptric power measuring point NP. Still alternatively, a plurality of points or all points in the near region may be used as the reference point.

Further, the invention is not limited to the spectacle lenses 1, 11, and 21, in which the near line portions 6C, 16C, and 26C of the principal lines of fixation 6, 16, and 26 are provided vertically with reference to the spectacle wearer.

Moreover, in the invention, the spherical equivalent power is not necessarily changed continuously but may be change stepwise.

Further, the gradient fn(x) of the graph of the spherical equivalent power may not necessarily be determined by using Equation (1) or (2). For example, the gradient fn(x) of the spherical equivalent power can be determined by using ray tracing in consideration of the prism degree of the lens.

The invention can be implemented by using any specific method in which the spherical equivalent power at the reference point located on the principal line of fixation 6, 16, or 26 in the near region 3, 13, or 23 of the spectacle lens 1, 11, or 21 is larger than the spherical equivalent power at a point away from the reference point horizontally toward the nose with reference to the spectacle wearer but smaller than the spherical equivalent power at a point away from the reference point horizontally toward the ear with reference to the spectacle wearer.

The invention can be used with a progressing-power spectacle lens, a single-vision lens, and other spectacle lenses.

**Claims**

1. A spectacle lens (1, 11, 21) comprising:

   a near region (3, 13, 23) corresponding to near vision,
   wherein a spherical equivalent power at a point located on a principal line of fixation (6, 16, 26) in the near region (3, 13, 23) is larger than the spherical equivalent power in a region away from the point toward the nose in a horizontal direction with reference to a spectacle wearer but smaller than the spherical equivalent power in a region away from the point toward the ear in the horizontal direction.

2. The spectacle lens (11, 21) according to claim 1, further comprising: in addition to the near region (13, 23), a far region (12) corresponding to far vision and having power smaller than the power in the near region (13, 23); and an intermediate region (14, 24) corresponding to intermediate vision and having power continuously changing from the power in the far region (12) to the power in the near region (13, 23).

3. The spectacle lens (21) according to claim 1 or 2, further comprising: in addition to the near region, an intermediate region (24) corresponding to intermediate vision and having power smaller than the power in the near region (23).

4. The spectacle lens (11, 21) according to claim 2 or 3, wherein the point is a progressing end point positioned at the boundary between the near region (13, 23) and the intermediate region (14, 24) or a near dioptric power measuring point (NP), which is the center of the near region (13, 23).

5. The spectacle lens (1, 11, 21) according to one of claims 1 to 4, wherein the gradient fn(x) of the spherical equivalent power along a line passing through the point and extending in the horizontal direction is defined within a range where astigmatism is smaller than or equal to 0.5 diopter (D) by the following Equation (1):

$$fn(x) = \frac{d}{dx}\left[\frac{1}{\sqrt{L^2 + (Lx/l)^2}}\right] \qquad (1)$$

where x represents the coordinate of the horizontal line (NL), an x coordinate of zero corresponds to the position (NO) of the foot of a line extending from the portion of the principal line of fixation (6, 16, 26) that corresponds to the far region (2, 12) and intersecting the horizontal line (NL) at right angles, L represents a near working distance, and 1 represents the distance from the pivotal center of the eyeball to the back surface of the lens (1, 11, 21).

6. The spectacle lens (1, 11, 21) according to one of claims 1 to 5,
wherein the position of a fitting point of the spectacle lens (1, 11, 21) when worn is determined by a near interpupillary distance,
the point is the fitting point (EP), and
the gradient fn(x) of the spherical equivalent power along a line extending in the horizontal direction is defined within a range where astigmatism is smaller than or equal to 0.5 diopter (D) by the following Equation (2):

$$fn(x) = \frac{d}{dx}\left[\frac{1}{\sqrt{L^2 + \left[\frac{L(x-m)}{l}\right]^2}}\right]$$

$$(2)$$

where x represents the coordinate of the line extending in the horizontal direction, the positive side of the x coordinate axis corresponds to the ear side in the horizontal direction, an x coordinate of zero corresponds to the fitting point, L represents a near working distance, 1 represents the distance from the pivotal center of the eyeball to the back surface of the lens (1, 11, 21), and m represents the difference between a far monocular interpupillary distance and a near monocular interpupillary distance.

7. A method for designing the spectacle lens (1, 11,21) according to one of the preceding claims, the method comprising:

setting the principal line of fixation (6, 16, 26);
setting the spherical equivalent power at the point in the near region (3, 13, 23);
setting the spherical equivalent power at the point to be larger than the spherical equivalent power in a region away from the point toward the nose in the horizontal direction with reference to the spectacle wearer; and
setting the spherical equivalent power at the point to be smaller than the spherical equivalent power in a region away from the principal line of fixation (6, 16, 26) toward the ear in the horizontal direction.

FIG. 1

FIG. 2

FIG. 3A

FIG. 3B

FIG. 4A

FIG. 4B

FIG. 5

FIG. 6

FIG. 7A

FIG. 7B

FIG. 8A

FIG. 8B

FIG. 9

FIG. 10

23

FIG. 11

FIG. 12A

FIG. 12B

FIG. 13A

FIG. 13B

**Europäisches Patentamt**
**European Patent Office**
**Office européen des brevets**

# EUROPEAN SEARCH REPORT

Application Number

EP 11 15 6157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 4 606 622 A (FUERTER GERHARD [DE] ET AL) 19 August 1986 (1986-08-19)<br>* figure 1 *<br>* claims 1, 22 *<br>* column 3, line 34 - column 3, line 46 *<br>* column 3, line 61 - column 4, line 17 * | 1-6<br><br>7 | INV.<br>G02C7/02 |
| X<br>A | WO 01/46744 A2 (ESSILOR INT [FR]) 28 June 2001 (2001-06-28)<br>* page 3, line 1 - line 13 *<br>* claims 4-6 *<br>* figures 3-6 * | 1-6<br><br>7 | |
| X<br>A | US 6 193 370 B1 (SHIRAYANAGI MORIYASU [JP]) 27 February 2001 (2001-02-27)<br>* figures 1, 3 *<br>* column 4, line 43 - line 49 *<br>* column 8, line 33 - line 44 * | 1-6<br><br>7 | |
| X,D<br>A | US 2003/142266 A1 (HAIMERL WALTER [DE] ET AL) 31 July 2003 (2003-07-31)<br>* abstract *<br>* figure 2 *<br>* paragraphs [0013], [0015], [0029] * | 1-6<br><br>7 | TECHNICAL FIELDS SEARCHED (IPC)<br><br>G02C |
| X<br>A | WO 03/048841 A1 (SOLA INT HOLDINGS [AU]; MILLER ANTHONY DENNIS [AU]; VARNAS SAULIUS RAY) 12 June 2003 (2003-06-12)<br>* abstract *<br>* figure 2 *<br>* page 1, line 25 - page 2, line 9 * | 1-6<br><br>7 | |
| X<br>A | US 2 109 474 A (ERNEST EVANS CHARLES) 1 March 1938 (1938-03-01)<br>* column 1, line 1 - line 11 *<br>* claim 1 *<br>* figures 2, 3 * | 1-6<br><br>7 | |

The present search report has been drawn up for all claims

| Place of search | Date of completion of the search | Examiner |
|---|---|---|
| Munich | 1 June 2011 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 15 6157

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2011

| Patent document cited in search report | | Publication date | Patent family member(s) | | Publication date |
|---|---|---|---|---|---|
| US 4606622 | A | 19-08-1986 | AU | 549625 B2 | 06-02-1986 |
| | | | AU | 7010081 A | 05-11-1981 |
| | | | CA | 1152369 A1 | 23-08-1983 |
| | | | DE | 3016935 A1 | 12-11-1981 |
| | | | EP | 0039497 A2 | 11-11-1981 |
| | | | ES | 8202961 A1 | 16-05-1982 |
| | | | JP | 1624768 C | 18-11-1991 |
| | | | JP | 2039767 B | 07-09-1990 |
| | | | JP | 57010113 A | 19-01-1982 |
| WO 0146744 | A2 | 28-06-2001 | AU | 772729 B2 | 06-05-2004 |
| | | | AU | 2538700 A | 03-07-2001 |
| | | | BR | 9917280 A | 26-12-2001 |
| | | | CA | 2363121 A1 | 28-06-2001 |
| | | | CN | 1346449 A | 24-04-2002 |
| | | | JP | 4335488 B2 | 30-09-2009 |
| | | | JP | 2003518275 T | 03-06-2003 |
| US 6193370 | B1 | 27-02-2001 | DE | 19917314 A1 | 21-10-1999 |
| | | | FR | 2777668 A1 | 22-10-1999 |
| | | | GB | 2336333 A | 20-10-1999 |
| | | | JP | 3881449 B2 | 14-02-2007 |
| | | | JP | 11305173 A | 05-11-1999 |
| US 2003142266 | A1 | 31-07-2003 | AU | 775951 B2 | 19-08-2004 |
| | | | AU | 7386001 A | 12-11-2001 |
| | | | WO | 0184213 A2 | 08-11-2001 |
| | | | DE | 10191693 D2 | 29-08-2002 |
| | | | EP | 1279061 A2 | 29-01-2003 |
| | | | JP | 2003532156 T | 28-10-2003 |
| WO 03048841 | A1 | 12-06-2003 | BR | 0214533 A | 09-11-2004 |
| | | | CA | 2467786 A1 | 12-06-2003 |
| | | | EP | 1461662 A1 | 29-09-2004 |
| | | | JP | 4481647 B2 | 16-06-2010 |
| | | | JP | 2005512121 T | 28-04-2005 |
| | | | US | 2005083482 A1 | 21-04-2005 |
| US 2109474 | A | 01-03-1938 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2003532156 T
- JP 2008511033 T
- JP 2000214419 A